# EUROPÄISCHE PATENTSCHRIFT

(11) **EP 0 836 877 B1**
(45) Veröffentlichungstag und Bekanntmachung des Hinweises auf die Patenterteilung: **15.05.2002**
(21) Anmeldenummer: 97117989.0
(22) Anmeldetag: 17.10.1997
(51) Int. Cl.: B01D 39/16, D04H 13/00, B32B 5/26

(54) **Mehrschichtiges Vlies sowie Verfahren zur Herstellung eines mehrschichtigen Vlieses**
Multilayer nonwoven fabric and process for making a nonwoven fabric
Tissu non-tissé multicouche et procédé de fabrication d'un tissu non-tissé multicouche

(30) Priorität: 17.10.1996 DE 19642958; 05.09.1997 US 924815
(43) Veröffentlichungstag der Anmeldung: 22.04.1998
(73) Patentinhaber: Corovin GmbH, D-31224 Peine (DE)
(72) Erfinder: Etzold, Stefan Dr., 30855 Langenhagen (DE)
(74) Vertreter: Patentanwälte Thömen & Körner

(56) Entgegenhaltungen:
- EP-A- 0 683 260
- EP-A- 0 788 873
- WO-A-95/17946
- WO-A-97/06945
- WO-A-97/31145
- US-A- 4 720 415
- US-A- 5 320 891
- PATENT ABSTRACTS OF JAPAN vol. 013, no. 094 (M-804), 6.März 1989 & JP 63 286330 A (NITTO ELECTRIC IND CO LTD), 24.November 1988,

## Beschreibung

Die Erfindung betrifft ein mehrschichtiges Vlies nach dem Oberbegriff des Anspruchs 1 sowie ein Verfahren zur Herstellung eines mehrschichtigen Vlieses nach dem Oberbegriff des Anspruchs 9.

Ein derartiges mehrschichtiges Vlies weist bezogen auf das Flächengewicht eine sehr hohe Festigkeit aufgrund der Spinnvlieslage und eine extrem hohe Wasserdichtigkeit aufgrund der Kombination aus der Spinnvlieslage und der Schmelzblaslage auf, wobei hier die Schmelzblaslage bezogen auf ihre Dicke und ihr Flächengewicht einen größeren prozentualen Anteil liefert.

Derartige mehrschichtige Vliese werden als Stehbündchen-Dichtungen bei Babywindeln, für Schutzkleidung und Abdecklagen im medizinischen Bereich und als Dachunterspannbahnen verwendet. Gleichzeitig besteht aber eine gute Wasserdampfdurchlässigkeit.

Maßgeblich für den Grad der Wasserdichtigkeit war bisher die Dicke der Spinnvlieslage und der Schmelzblaslage und damit der Einsatz an Basismaterial.

Der Erfindung liegt die Aufgabe zugrunde, ein mehrschichtiges Vlies der eingangs genannten Art dahingehend zu verbessern, daß bezogen auf die Einsatzmenge an Basismaterial eine höhere Wasserdichtigkeit erzielbar ist.

Diese Aufgabe wird bei einem mehrschichtigen Vlies nach dem Oberbegriff des Anspruchs 1 und einem Verfahren zur Herstellung eines mehrschichtigen Vlieses nach dem Oberbegriff des Anspruchs 9 durch die im jeweiligen kennzeichnenden Teil angegebenen Merkmale gelöst. Weiterbildungen und vorteilhafte Ausgestaltungen der Erfindung ergeben sich aus den Unteransprüchen.

Die Wirkung der Erfindung ist überraschend, da an sich zu erwarten wäre, daß durch das Strecken des mehrschichtigen Vlieses die Poren erweitert würden, so daß auch die Wasserdichtigkeit stetig und etwa linear abnehmen würde. Versuche zeigten jedoch einen nichtlinearen Zusammenhang zwischen Strekkung und Wasserdichtigkeit. So behält das mehrschichtige Vlies beim Strecken zunächst seine ursprüngliche Wasserdichtigkeit etwa unverändert bei, bis schließlich ab einem bestimmten Grad der Streckung die Wasserdichtigkeit stark abnimmt.

Nähere Untersuchungen haben gezeigt, daß die Schmelzblaslage aus sehr voluminös abgelegten dünnen Fasern besteht, die zwischen einander Poren bilden. Wird das mehrschichtige Vlies gestreckt, so strecken sich nur die Fasern der Spinnvlieslage, während die Fasern der Schmelzblaslage lediglich zwischen den Prägemarken in Streckrichtung längs ausgerichtet werden. Die ursprünglich voluminös angeordneten Fasern der Schmelzblaslage treten bei diesem Vorgang enger zusammen. Die Schichtdicke der Schmelzblaslage verringert sich hierbei in dem Maße, in dem sich die zwischen den Fasern ursprünglich vorhandenen Zwischenräume verkleinern. Daraus ergibt sich, daß die Poren beim Strecken zunächst nicht größer, sondern vielmehr erheblich kleiner werden.

Allerdings trifft dies lediglich auf die Schmelzblaslage zu, während bei der Spinnvlieslage die mit der Streckung dünner werdenden Fasern hier tatsächlich zu einer Vergrößerung der Poren führen. Die enger werdenden Poren der Schmelzblaslage kompensieren damit die geringere Dicke ihrer Lage. Erst wenn das mehrschichtige Vlies weiter gestreckt wird, verringert sich auch die Dicke der Fasern der Schmelzblaslage oder aber die Fasern zerreißen. Diese Erscheinung ist gleichbedeutend mit einer Vergrößerung der Poren, so daß beim Überschreiten eines bestimmten Grades der Streckung die Wasserdichtigkeit stark abnimmt.

Unter Ausrichtungsreserve wird im Zusammenhang mit der vorliegenden Erfindung das Maß verstanden, daß das Vlies gestreckt werden kann, bis die Fasern der Schmelzblaslage sich in Richtung der Streckung ausgerichtet haben, so daß sie praktisch zwischen den Prägemarken eine gerade Ausrichtung aufweisen. Die Ausrichtungsreserve wäre bei vollständig gerader Ausrichtung erschöpft und bei weiterer Streckung würden die Fasern reißen oder, wenn sie sich strecken lassen, sich im Durchmesser verringern.

Die Verstreckungseigenschaften des Spinnvlieses lassen sich durch die Kristallisation des Kunststoffmaterials beeinflussende Zusatzstoffe, durch die Abzugsgeschwindigkeit beim Spinnvorgang, sowie durch die Kühlung der aus der Schmelze abgezogenen Fasern beeinflussen. So kann durch Hinzufügen an sich bekannter Zusatzstoffe der kristalline Anteil im Kunststoff reduziert werden oder die Neigung zur Kristallisation unterdrückt oder wenigstens vermindert werden. Der kristalline Anteil kann aber auch durch eine verhältnismäßig niedrige Abzugsgeschwindigkeit im Bereich zwischen 1000 und 1500 m/min, bei der nur ein geringer Verstreckungsgradient auftritt, und durch eine definierte langsame Abkühlung vermindert werden.

Obwohl die Schmelzpunkte bei Verwendung weitgehend gleicher Basisrohstoffe für die Spinnvlieslage und die Schmelzblaslage eng benachbart sind, erfolgt nur eine Verstreckung der Fasern der Spinnvlieslage. Dies ist durch folgenden Mechanismus begründet:

Da die Fasern der Spinnvlieslage über keine Ausrichtreserve verfügen, werden beim Strecken des Vlieses bereits von Anfang an Dehnungskräfte in den Fasern der Spinnvlieslage wirksam. Diese Dehnungskräfte bewirken, daß das auf eine Temperatur unterhalb seines Schmelzpunktes erwärmte Polymer der Fasern zu fließen beginnt. Die dabei entstehende Reibungswärme erhöht geringfügig die Temperatur der Fasern, läßt sie erweichen und erleichtert so die weitere Verstreckung bis zum endgültigen Maß. Demgegenüber werden auf die Fasern der Schmelzblaslage praktisch keine Dehnungskräfte ausgeübt, so daß hier nahezu keine Temperaturerhöhung stattfindet und die Fasern nicht erweichen, sondern sich nur ausrichten können.

Das mehrschichtige Vlies kann ein- oder zweidimensional gestreckt sein. Bei eindimensionaler Streckung kann die Dehnungsreserve voll ausgeschöpft werden, während bei zweidimensionaler Streckung die Dehnungsreserve auf die Richtungskomponenten der Streckung verteilt werden muß.

Das mehrschichtige Vlies kann um das zweifache bis fünffache Maß seiner ursprünglichen Abmessungen gestreckt werden. Die sinnvolle Obergrenze liegt da, wo eine weitere Streckung zu einem deutlichen Anstieg der Wasserdurchlässigkeit führen würde.

Vorzugsweise sind die beim Wärmeprägen entstehenden Prägemarken der beiden Lagen aus der Spinnvlieslage und der Schmelzblaslage gegenseitig so angeordnet, daß sich benachbarte Prägemarken im Bereich quer zur Produktionsrichtung wenigstens teilweise überschneiden. Hierdurch wird erreicht, daß bei jeder Drehstellung der die Prägestempel tragenden Walzen eine ausreichend große Kontaktfläche für die Prägestempel vorhanden ist, um Druckspitzen zu vermeiden. Da die Prägewalzen mit konstanter Anpreßkraft aneinander gedrückt werden, würden sonst zu hohe Druckkräfte entstehen und die Kanten der Prägestempel durch die textilen Lagen hindurchdrücken.

Die Fasern der Spinnvlieslage und/oder der Schmelzblaslage können aus Polypropylen und/oder Polyester und/oder Polyethylen als Basisrohstoff bestehen, denn diese Rohstoffe lassen sich, wenn auch nicht in gleichem Maße, verstrecken. Die für die Erfindung notwendigen Eigenschaften lassen sich hierbei auch durch Zuschlagstoffe modifizieren. Für die Spinnvlieslage und die Schmelzblaslage können gleiche aber auch ungleiche Basisrohstoffe verwendet werden.

Der Basisrohstoff für die Spinnvlieslage kann auch aus einer Mischung mit Copolymeren und anderen Polymeren bestehen. Auf diese Weise kann Einfluß auf das Dehnungsverhalten der Spinnvlieslage genommen werden.

Der Viskositätsbereich des Basisrohstoffes für die Spinnvlieslage liegt vorzugsweise im Bereich zwischen MFI 16 bis MFI 35 nach DIN 1133 und der Viskositätsbereich des Basisrohstoffes für die Schmelzblaslage liegt vorzugsweise im Bereich zwischen MFI 400 und MFI 2500 nach DIN 1133. Der Viskositätsbereich eines Basisrohstoffes läßt sich beispielsweise durch Zugabe von Oxidationsmitteln verändern, die die Polymerketten spalten. Die höhere Viskosität entsprechend einem kleinen MFI-Wert der Spinnvlieslage gegenüber der Schmelzblaslage führt dazu, daß auch bei benachbarten Schmelzpunkten und etwa gleicher Temperatur sich die Fasern der Spinnvlieslage strekken lassen, während sich die Fasern der Schmelzblaslage einer Streckung widersetzen und nur ausrichten.

Vorzugsweise weisen die Fasern der Spinnvlieslage einen Durchmesser zwischen 20 und 40 µm und die Fasern der Schmelzblaslage einen Durchmesser zwischen 0,5 und 10 µm auf. Die Dicke der Fasern der Spinnvlieslage gewährleistet daher sowohl eine ausreichende Festigkeit und Reserve bei der Durchmesserverringerung im Zuge der Streckung. Die Fasern der Schmelzblaslage, die zur Festigkeit wenig aber zur Wasserdichtigkeit viel beitragen, ergeben eine sehr dichte Lage bei geringen Zwischenräumen.

Weiterbildungen und vorteilhafte Ausgestaltungen der Erfindung ergeben sich aus den Ansprüchen, der weiteren Beschreibung und der Zeichnung, anhand der die Erfindung näher erläutert wird.

In der Zeichnung zeigen:
- Fig. 1: zeigt einen schematischen Schnitt durch ein mehrschichtiges Vlies vor der Dehnung,
- Fig. 2: einen schematischen Schnitt durch das mehrschichtige Vlies nach der Dehnung,
- Fig. 3: eine Draufsicht auf die Spinnvlieslage eines mehrschichtigen Vlieses vor der Dehnung,
- Fig. 4: eine Draufsicht auf die Schmelzblaslage eines mehrschichtigen Vlieses vor der Dehnung,
- Fig. 5: eine Draufsicht auf die Spinnvlieslage des mehrschichtigen Vlieses nach der Dehnung,
- Fig. 6: eine Draufsicht auf die Schmelzblaslage des mehrschichtigen Vlieses nach der Dehnung,
- Fig. 7: eine Vorrichtung zur Streckung des mehrschichtigen Vlieses in Produktionsrichtung und
- Fig. 8: eine Vorrichtung zur Streckung des mehrschichtigen Vlieses quer zur Produktionsrichtung.

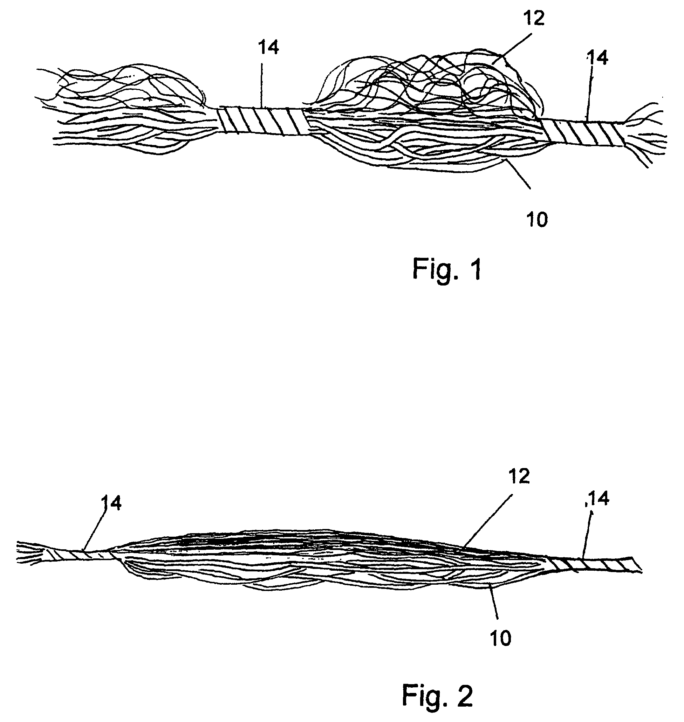

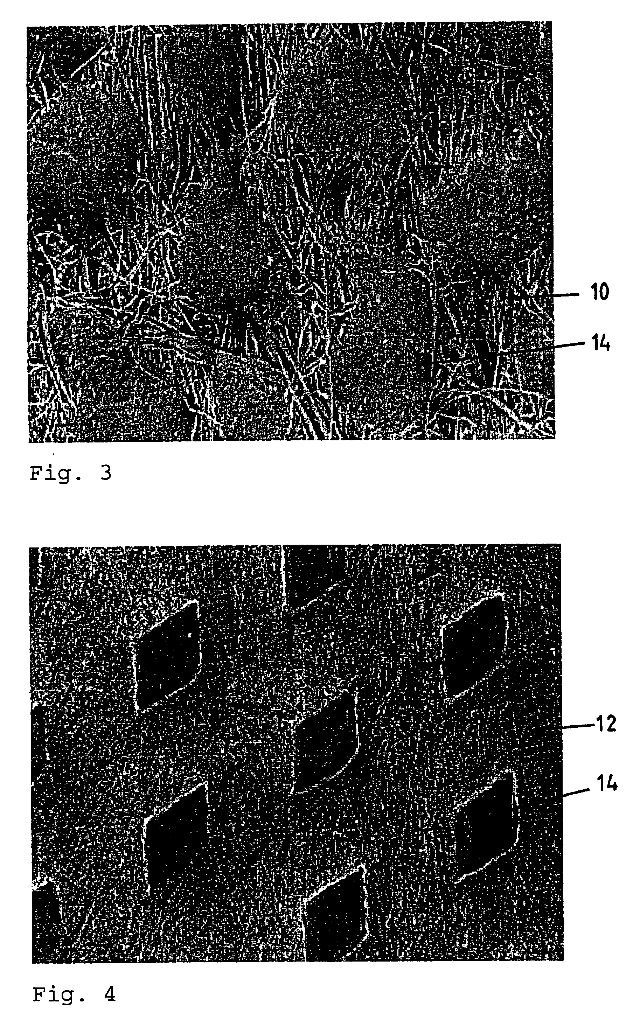

Fig. 1 zeigt einen schematischen Schnitt durch ein mehrschichtiges Vlies vor der Dehnung. Das mehrschichtige Vlies besteht aus einer Spinnvlieslage 10 und einer Schmelzblaslage 12, die durch Wärmeprägen miteinander verbunden sind. Die Spinnvlieslage 10 wird nach dem üblichen Spinnvliesverfahren auf einem Legeband hergestellt, während die Schmelzblaslage 12 nach einem üblichen Schmelzblasverfahren erzeugt wird Die beiden Lagen werden dann mittels beheizter Kalanderwalzen, die mit Prägeinseln versehen sind, verbunden. Dieser Vorgang wird als Wärmeprägen (Thermobonding) bezeichnet.

Es ist möglich, zuerst die Spinnvlieslage herzustellen und zwischenzulagern und später von der Rolle her oder auch gleich nach der Herstellung in einem anschließenden Produktionsprozeß die Schmelzblaslage 12 auf der Spinnvlieslage 10 oder auf einem gesonderten Legeband herzustellen und mit der Spinnvlieslage zusammenführen, und dann beide Lagen durch Wärmeprägen zu verbinden. Die Prägemarken sind hier mit 14 bezeichnet. Wird die Spinnvlieslage 10 gleich anschließend mit der Schmelzblaslage 12 versehen, so kann eine gesonderte Verfestigung der Spinnvlieslage entfallen und stattdessen zusammen beim gemeinsamen Wärmeprägen von Spinnvlieslage 10 und Schmelzblaslage 12 erfolgen.

Die Fasern der Schmelzblaslage 12 sind im Durchmesser etwa um den Faktor zehn geringerer als die Fasern der Spinnvlieslage 10. Nahe ihrer Erweichungstemperatur lassen sich die Fasern der Spinnvlieslage 10 stecken. Dagegen werden beim Dehnen des mehrschichtigen Vlieses die Fasern der Schmelzblaslage 12 lediglich ausgerichtet. Da die Fasern der Schmelzblaslage 12 zuerst sehr locker liegen und daher auch senkrecht zur Ablageebene verhältnismäßig viel Raum einnehmen, gelingt es, sie beim Strecken des mehrschichtigen Vlieses weitgehend parallel zu dessen Längsebene auszurichten und damit die Schichtdicke der Schmelzblaslage 12 und die Abstände zwischen dessen Fasern zu komprimieren.

Dieser Zustand ist in Fig. 2 dargestellt. Durch die Streckung der Fasern der Spinnvlieslage 10 haben sich diese im Durchmesser verjüngt, während die Fasern der Schmelzblaslage 12 dichter beieinander liegen. Trotz einer geringeren Schichtdicke bleibt die Wasserdichtigkeit weitgehend konstant, da das engere Zusammenrücken der Fasern der Schmelzblaslage 12 zu einer Verringerung der Größe ihrer Poren führt.

Die Figuren 3 bis 6 zeigen fotografische Abbildungen der Oberfläche erfindungsgemäß hergestellter und beschaffener mehrschichtiger Vliese. Dabei ist Fig. 3 eine Draufsicht auf die Spinnvlieslage und Fig. 4 eine Draufsicht auf die Schmelzblaslage eines mehrschichtigen Vlieses jeweils vor der Dehnung. Die Abbildungen besitzen den gleichen Maßstab. Man erkennt, daß die Spinnvlieslage 10 eine wesentlich gröbere Struktur als die Schmelzblaslage 12 aufweist. Die Prägemarken 14 der Spinnvlieslage 10 und der Schmelzblaslage 12 sind gegenseitig so angeordnet, daß sich benachbarte Prägemarken 14 im Bereich quer zur Produktionsrichtung S wenigstens teilweise überschneiden.

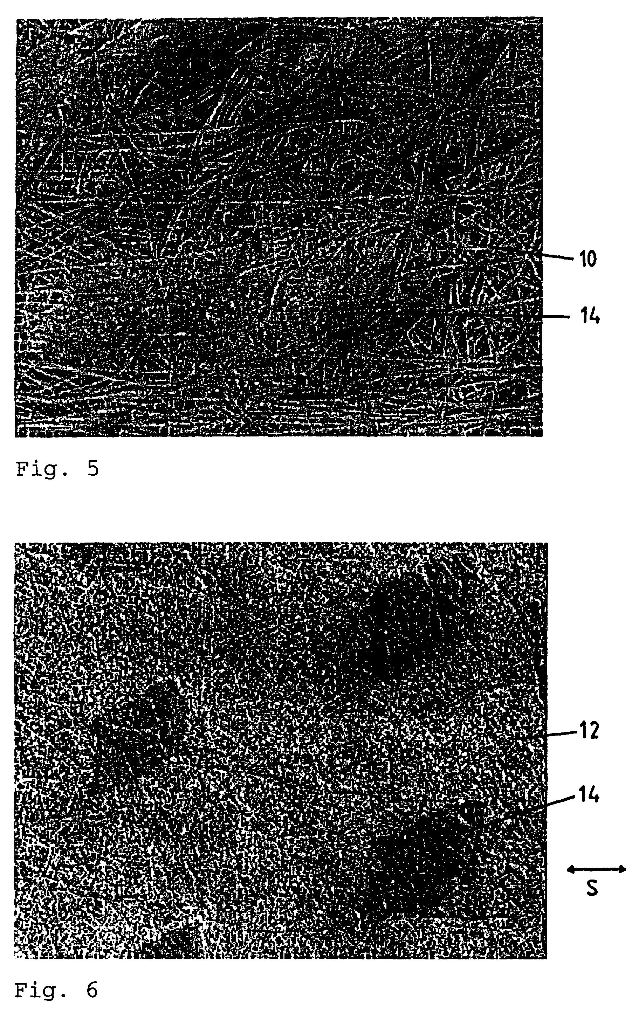

Die Figuren 5 und 6 zeigen die entsprechenden Ansichten nach der Dehnung, nämlich Fig. 5 eine Draufsicht auf die Spinnvlieslage 10 und Fig. 6 eine Draufsicht auf die Schmelzblaslage 12 des mehrschichtigen Vlieses. Die Fasern der Spinnvlieslage 10, die in Dehnungsrichtung liegen, sind im Durchmesser geringfügig verringert. Die Fasern der Schmelzblaslage 12 sind dichter aneinander gerückt. Da die Fasern ungleich lang sind, fallen insbesondere diejenigen auf, die bei der Dehnung des Vlieses bereits nahezu vollständig gestreckt und damit in der Vliesebene ausgerichtet sind. Diese Fasern drükken darunterliegende längere Fasern mit zusammen.

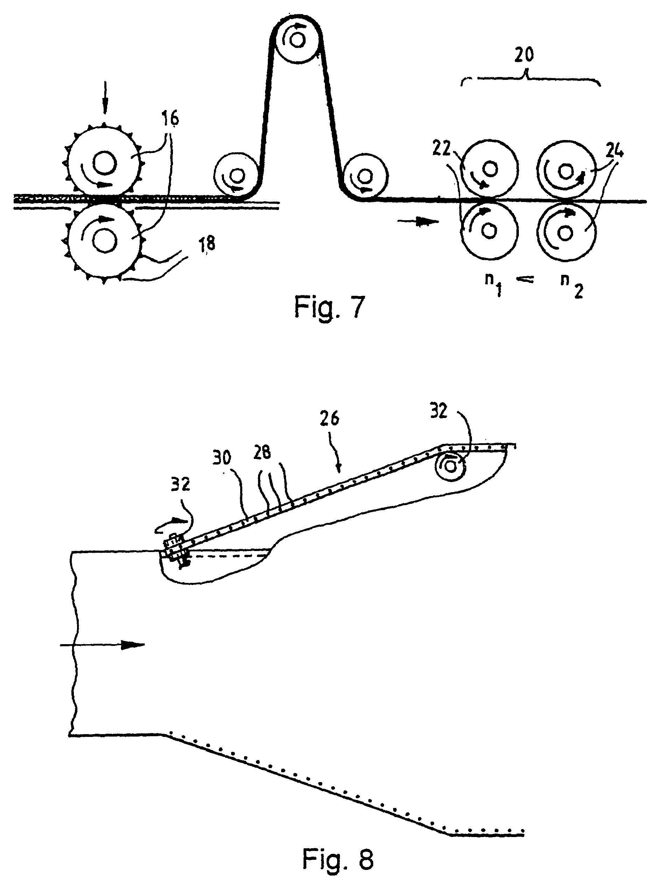

Die Figuren 7 und 8 zeigen Vorrichtungen zur Herstellung eines mehrschichtigen elastischen Flächengebildes. Nachdem die einzelnen Lagen aus Spinnvlieslage und Schmelzblaslage hergestellt wurden, gelangen sie gemeinsam zu beheizten Kalanderwalzen 16, mit erhabenen Prägeinseln 18, durch die die aufeinander liegenden Lagen verbunden werden, wobei auf dem mehrschichtigen Vlies Prägemarken entstehen.

Gemäß Fig. 7 schließt sich in Transportrichtung eine Dehnungsvorrichtung 20 aus mehreren Walzenpaaren 22, 24 an, die ebenfalls beheizt ist. Das Vlies wird dabei auf eine Temperatur knapp unterhalb der Erweichungstemperatur der Fasern ihrer Lagen erwärmt. In Bahnrichtung nachfolgende Walzenpaare 24 der Dehnungsvorrichtung 20 laufen mit höherer Umlaufgeschwindigkeit als davorliegende Walzenpaare 22 und bewegen das mehrschichtige Vlies mit erhöhter Transportgeschwindigkeit, so daß eine Verstreckung erfolgt.

Fig. 8 zeigt eine als Streckrahmen 26 ausgebildete Dehnungsvorrichtung, mit dem eine Dehnung quer zur Bahnrichtung vorgenommen werden kann. Der beheizte Streckrahmen 26 umfaßt zwei mit Mitnehmern 28 besetzte Endlosgurte 30, die über Führungsrollen 32 laufen und einen Weg beschreiben, der von den Außenseiten eines ungestreckten bahnförmigen Flächengebildes ausgehend schräg nach außen von der Bahnmittelachse weg führt. Die Mitnehmer 32 greifen das Vlies außen an, so daß es beim Weitertransport aufgrund des Weges der Endlosgurte 30 gedehnt wird.

Für eine zweidimensionale Dehnung, nämlich sowohl in Bahnrichtung als auch quer dazu, werden die Vorrichtungen nach Fig. 7 und 8 in Kombination benötigt.

Nachfolgend werden Meßergebnisse vorgestellt, die bei einem mehrschichtigen Vlies nach der Erfindung ermittelt wurden. Es wurde ein mehrschichtiges Vlies hergestellt, dessen Spinnvlieslage ein Flächengewicht von 30 g/m² und dessen Schmelzblaslage ein Flächengewicht von 15 g/m² betrug. Der Anteil der Wasserdichtigkeit der Spinnvlieslage war 80 mm Wassersäule und der Anteil der Wasserdichtigkeit der Schmelzblaslage war 200 mm Wassersäule, insgesamt also 280 mm Wassersäule. Nach Strecken des mehrschichtigen Vlieses um den Faktor drei betrug das Flächengewicht der Spinnvlieslage 10 g/m² und das Flächengewicht der Schmelzblaslage 5 g/m². Nun wurde eine Wasserdichtigkeit der Spinnvlieslage von 40 mm Wassersäule und der Schmelzblaslage von unverändert 200 mm Wassersäule ermittelt. Die gesamte Wasserdichtigkeit betrug somit 240 mm Wassersäule und lag damit nur geringfügig niedriger als die des ursprünglichen unverstreckten Vlieses mit dem dreifachen Anteil an Basismaterial bezogen auf dieselbe Fläche.

Durch die Dicke der Lagen und das Maß der Verstreckung läßt sich die Wasserdichtigkeit des Vlieses variieren und sehr genau einstellen. Bei Einstellung einer hohen Wasserdichtigkeit kann das Material für ähnliche Aufgaben eingesetzt werden, die bisher Folien vorbehalten waren, wobei eine Atmungsaktivität, das heißt eine Durchlässigkeit für Gase und Dämpfe bereits vorhanden ist. Außerdem laßt sich das Material als Filter verwenden, und zwar bei hoher Wasser- oder Flüssigkeitsdichtigkeit zur Reinigung von mit Feststoffen oder Tröpfchen verunreinigten Gasen und bei mittlerer oder niedriger Wasseroder Flüssigkeitsdichtigkeit zur Reinigung von mit Feststoffen verunreinigten Flüssigkeiten.

## Patentansprüche

1. Mehrschichtiges Vlies, bestehend aus wenigstens einer Spinnvlieslage (10) und wenigstens einer Schmelzblaslage (12), die durch Wärmeprägung miteinander verbunden sind, **dadurch gekennzeichnet, daß** das mehrschichtige Vlies nahe der Erweichungstemperatur der Fasern der Spinnvlieslage (10) unter Strecken der Fasern der Spinnvlieslage (10) und Ausrichten der Fasern der Schmelzblaslage (12) maximal bis zur Ausrichtungsreserve der Fasern der Schmelzblaslage (12) bleibend gestreckt ist.

2. Mehrschichtiges Vlies nach Anspruch 1, **dadurch gekennzeichnet, daß** das mehrschichtige Vlies ein- oder zweidimensional gestreckt ist.

3. Mehrschichtiges Vlies nach Anspruch 1 oder 2, **dadurch gekennzeichnet, daß** das mehrschichtige Vlies um das zweifache bis fünffache Maß seiner ursprünglichen Abmessungen gestreckt ist.

4. Mehrschichtiges Vlies nach einem der Ansprüche 1 bis 3, **dadurch gekennzeichnet, daß** die beim Wärmeprägen entstehenden Prägemarken (14) gegenseitig so angeordnet sind, daß sich benachbarte Prägemarken (14) im Bereich quer zur Produktionsrichtung (S) wenigstens teilweise überschneiden.

5. Mehrschichtiges Vlies nach einem der Ansprüche 1 bis 4, **dadurch gekennzeichnet, daß** die Fasern der Spinnvlieslage (10) und/oder der Schmelzblaslage (12) aus Polypropylen und/oder isotaktischem Polypropylen und/oder Polyester und/oder Polyethylen als Basisrohstoff bestehen.

6. Mehrschichtiges Vlies nach Anspruch 5, **dadurch gekennzeichnet, daß** der Basisrohstoff für die Spinnvlieslage aus einer Mischung mit Copolymeren und anderen Polymeren besteht.

7. Mehrschichtiges Vlies nach Anspruch 5 oder 6, **dadurch gekennzeichnet, daß** der Viskositätsbereich des Basisrohstoffs für die Spinnvlieslage (10) im Bereich zwischen MFI 16 bis MFI 35 nach DIN 1133 liegt und der Viskositätsbereich des Basisrohstoffs für die Schmelzblaslage (12) im Bereich zwischen MFI 400 und MFI 2500 nach DIN 1133 liegt.

8. Mehrschichtiges Vlies nach einem der Ansprüche 1 bis 7, **dadurch gekennzeichnet, daß** die Fasern der Spinnvlieslage (10) einen Durchmesser zwischen 20 und 40 µm und die Fasern der Schmelzblaslage (12) einen Durchmesser zwischen 0,5 und 10 µm aufweisen.

9. Verfahren zur Herstellung eines mehrschichtigen Vlieses, bestehend aus wenigstens einer Spinnvlieslage und wenigstens einer Schmelzblaslage, die durch Wärmeprägung miteinander verbunden werden, **dadurch gekennzeichnet, daß** das mehrschichtige Vlies nahe der Erweichungstemperatur der Fasern der Spinnvlieslage unter Strecken der Fasern der Spinnvlieslage und Ausrichten der Fasern der Schmelzblaslage maximal bis zur Ausrichtungsreserve der Fasern der Schmelzblaslage gestreckt wird.

10. Verfahren nach Anspruch 9, **dadurch gekennzeichnet, daß** das mehrschichtige Vlies ein- oder zweidimensional gestreckt wird.

11. Verfahren nach Anspruch 9 oder 10, **dadurch gekennzeichnet, daß** das mehrschichtige Vlies um das zweifache bis fünffache Maß seiner ursprünglichen Abmessungen gestreckt wird.

## Claims

1. A multi-ply nonwoven, consisting of at least one spunbonded ply (10) and at least one melt-blown ply (12), which are bonded together by hot embossing, **characterised in that** the multi-ply nonwoven is permanently drawn close to the softening temperature of the fibres of the spun-bonded ply (10) with drawing of the fibres of the spun-bonded ply (10) and orientation of the fibres of the melt-blown ply (12) at most to the orientation capacity of the fibres of the melt-blown ply (12).

2. A multi-ply nonwoven according to claim 1, **characterised in that** the multi-ply nonwoven is drawn one-or two-dimensionally.

3. A multi-ply nonwoven according to claim 1 or claim 2, **characterised in that** the multi-ply nonwoven is drawn by two to five times its original dimensions.

4. A multi-ply nonwoven according to one of claims 1 to 3, **characterised in that** the embossing marks (14) arising during hot embossing are so arranged relative to one another that adjacent embossing marks (14) overlap at least partially in the area perpendicular to the production direction (S).

5. A multi-ply nonwoven according to one of claims 1 to 4, **characterised in that** the fibres of the spun-bonded ply (10) and/or the melt-blown ply (12) consist of polypropylene and/or isotactic polypropylene and/or polyester and/or polyethylene as basic raw material.

6. A multi-ply nonwoven according to claim 5, **characterised in that** the basic raw material for the spun-bonded ply consists of a mixture of copolymers and other polymers.

7. A multi-ply nonwoven according to claim 5 or claim 6, **characterised in that** the viscosity range of the basic raw material for the spun-bonded ply (10) lies in the range between MFI 16 and MFI 35 to DIN 1133 and the viscosity range of the basic raw material for the melt-blown ply (12) lies in the range between MFI 400 and MFI 2500 to DIN 1133.

8. A multi-ply nonwoven according to one of claims 1 to 7, **characterised in that** the fibres of the spun-bonded ply (10) exhibit a diameter of between 20 and 40 µm and the fibres of the melt-blown ply (12) exhibit a diameter of between 0.5 and 10 µm.

9. A method for producing a multi-ply nonwoven, consisting of at least one spun-bonded ply and at least one melt-blown ply, which are bonded together by hot embossing, **characterised in that** the multi-ply nonwoven is drawn close to the softening temperature of the fibres of the spun-bonded ply with drawing of the fibres of the spun-bonded ply and orientation of the fibres of the melt-blown ply at most to the orientation capacity of the fibres of the melt-blown ply.

10. A method according to claim 9, **characterised in that** the multi-ply nonwoven is drawn one- or two-dimensionally.

11. A method according to claim 9 or claim 10, **characterised in that** the multi-ply nonwoven is drawn by two to five times its original dimensions.

## Revendications

1. Nappe multicouches, constituée d'une couche de non-tissé au moins (10) et d'une couche soufflée à chaud (12) au moins, couches qui sont reliées entre elles par gaufrage thermique, **caractérisée en ce que** la nappe multicouches est étirée de façon permanente à une température voisine de la température de ramollissement des fibres de la couche de non-tissé (10), en étirant les fibres de la couche de non-tissé (10) et en orientant les fibres de la couche soufflée à chaud (12) au maximum jusqu'à la réserve d'alignement des fibres de la couche soufflée à chaud.

2. Nappe multicouches, **caractérisée en ce qu**'elle est étirée dans une ou dans deux dimensions.

3. Nappe multicouches suivant la revendication 1 ou 2, **caractérisée en ce qu'**elle est étirée de manière à atteindre de deux à cinq fois ses dimensions initiales.

4. Nappe multicouches suivant une des revendications 1 à 3, **caractérisée en ce que** les marques de gaufrage (14) produites lors du gaufrage thermique sont disposées, l'une par rapport à l'autre, de façon que des marques de gaufrage voisines (14) se croisent partiellement au moins dans la zone transversale au sens de production S.

5. Nappe multicouches suivant une des revendications 1 à 4, **caractérisée en ce que** les fibres de la couche de non-tissé (10) et/ou de la couche soufflée à chaud (12) comportent comme matière de base du polypropylène et/ou du polypropylène isotactique et/ou du polyester et/ou du polyéthylène.

6. Nappe multicouches suivant la revendication 5, **caractérisée en ce que** la matière première de base pour la couche de non-tissé est constituée d'un mélange de copolymères et d'autres polymères.

7. Nappe multicouches suivant la revendication 5 ou 6, **caractérisée en ce que** la plage de viscosité de la matière première de base de la couche de non-tissé (10) se situe entre MFI 16 à MFI 35 selon DIN 1133 et que la plage de viscosité de la matière première de base de la couche soufflée à chaud (12) se situe entre MFI 400 et MFI 2500 selon DIN 1133.

8. Nappe multicouches suivant une des revendications 1 à 7, **caractérisée en ce que** les fibres de la couche de non-tissé (10) présentent un diamètre compris entre 20 et 40 µm et que les fibres de la couche soufflée à chaud (12) présentent un diamètre compris entre 0,5 et 10 µm.

9. Procédé de fabrication d'une nappe multicouches, constituée d'une couche de non-tissé au moins et d'une couche soufflée à chaud au moins, qui sont reliées entre elles par gaufrage thermique, **caractérisé en ce que** la nappe multicouches est étirée à une température voisine de la température de ramollissement des fibres de la couche de non-tissé en étirant les fibres de celle-ci et en orientant les fibres de la couche soufflée à chaud au maximum jusqu'à la réserve des fibres de la couche soufflée à chaud.

10. Procédé selon la revendication 9, **caractérisé en ce que** la nappe multicouches est étirée dans une ou dans deux dimensions.

11. Procédé selon la revendication 9 ou 10, **caractérisé en ce que** la nappe multicouches est étirée de manière à atteindre entre deux et cinq fois ses dimensions initiales.
